# EUROPEAN PATENT SPECIFICATION

(11) **EP 3 620 337 B1**
(45) Date of publication and mention of the grant of the patent: **23.07.2025**
(21) Application number: 18823628.5
(22) Date of filing: 28.03.2018
(51) Int. Cl.: B60W 30/06, B60R 21/00, B60W 30/095, B60W 40/04, B60W 50/14, G08G 1/16, B62D 15/02

(54) **DRIVING ASSISTANCE APPARATUS**
FAHRASSISTENZVORRICHTUNG
APPAREIL D'ASSISTANCE À LA CONDUITE

(30) Priority: 26.06.2017 JP 2017123859
(43) Date of publication of application: 11.03.2020
(73) Proprietor: Hitachi Astemo, Ltd., Hitachinaka-shi, Ibaraki 312-8503 (JP)
(72) Inventor: MATSUDA Satoshi, Hitachinaka-shi Ibaraki 312-8503 (JP); TSUTSUI Takashi, Hitachinaka-shi Ibaraki 312-8503 (JP)
(74) Representative: Manitz Finsterwald Patent- und Rechtsanwaltspartnerschaft mbB
(86) International application number: PCT/JP2018/012665
(87) International publication number: WO 2019/003530

(56) References cited:
- WO-A1-2012/143033
- JP-A- 2011 046 335
- JP-A- 2011 046 335
- JP-A- 2016 060 223
- JP-A- 2016 084 029
- JP-A- H10 264 840
- KR-B1- 101 593 839
- US-A1- 2015 025 732

## Description

### Technical Field

The present invention relates to a driving support device that supports driving operation of a vehicle.

### Background Art

A driving support device, such as a parking support device, that supports, when a driver parks a vehicle, any or all of the driver's steering wheel operation, accelerator operation, brake operation, and the like in order to support the guidance of the vehicle to a target parking position is widely known.

The above parking support device, first, by analyzing environmental information around the own vehicle acquired by an in-vehicle sonar or in-vehicle camera in a parking lot, detects a place (space) where the own vehicle can be parked and notifies an in-vehicle display device, such as a navigation system, that an available parking place has been detected. After stopping the own vehicle, the driver uses input means of the in-vehicle display device to select a desired parking place as the target parking position from among the available parking places displayed on the in-vehicle display device (screen), and when the parking support device starts parking support, can receive the parking support in parking the own vehicle at the target parking position.

In the above parking support device, a method for determining the ease of parking at the target parking position is known. PTL 1 proposes a technique of determining, when the driver manually parks the own vehicle at the target parking position, the ease of vehicle operation during parking (that is, the operation burden on the driver) by using an indicator such as a small steering amount of the steering wheel or a small number of turnovers.

### Citation List

### Patent Literature

PTL 1: JP 2011-046335 A

### Summary of Invention

### Technical Problem

However, in the above-described conventional parking support device, the vehicle is running by manual operation increases, and the position of the own vehicle constantly changes.

KR 10-1593839 discloses a parking trajectory calculating device and method. They determine in closer described manner a trajectory between a parking start position and a parking completion position also in view of obstacles. KR 101 593 839 B1 discloses in particular a driving support device, comprising:
an external world information acquisition unit that acquires external world information;
an available parking position calculation unit that calculates an available parking position of an own vehicle from the external world information acquired by the external world information acquisition unit;
an own vehicle stop position estimation unit that detects a position of the own vehicle and estimates an estimated stop position at which the own vehicle is estimated to stop from the position of the own vehicle; and
a parking route evaluation unit that evaluates a parking route from the estimated stop position to one or more of the available parking positions, wherein the parking route evaluation unit evaluates the parking route on a basis of an arc having a turning radius greater than or equal to a minimum rotation radius of the own vehicle from the estimated stop position and an arc having a turning radius greater than or equal to a minimum rotation radius of the own vehicle from the available parking position.

US 2015/0025732 A1 discloses an apparatus and a method for controlling parking in which starting from a selected parking slot an automatic parking path is established.

It is the object of the invention to provide a driving support device that performs a simple determination of a parking route to a target parking position in the driving support device while the vehicle is running and can improve the convenience of a driver of the vehicle.

### Solution to Problemd

The above object is accomplished by the features of claim 1.

A driving support device has the features of claim 1. It includes an external world information acquisition unit that acquires external world information; an available parking position calculation unit that calculates an available parking position of an own vehicle from the external world information acquired by the external world information acquisition unit; an own vehicle stop position estimation unit that detects a position of the own vehicle and estimates an estimated stop position at which the own vehicle is estimated to stop from the position of the own parking position calculation unit that calculates an available parking position of an own vehicle from the external world information acquired by the external world information acquisition unit; an own vehicle stop position estimation unit that detects a position of the own vehicle and estimates an estimated stop position at which the own vehicle is estimated to stop from the position of the own vehicle; and a parking route determination unit that determines a first parking route from the estimated stop position to one or more of the available parking positions, in which the parking route determination unit determines the parking route on a basis of an arc having a turning radius greater than or equal to the minimum rotation radius of the own vehicle from the estimated stop position and an arc having a turning radius greater than or equal to the minimum rotation radius of the own vehicle from the available parking position. Claim 1 recites further features.

### Advantageous Effects of Invention

According to the present invention, it is possible for a driver to know relative merits of a parking route in parking support before starting parking support and to determine whether to perform parking using the parking support to a target parking position by analyzing environmental information (external world information) around the vehicle acquired using, for example, sensing means mounted on the vehicle, and by evaluating, while the vehicle is running, the parking route to follow when performing parking support from a position (estimated stop position) at which the vehicle is estimated to stop to the target parking position for the driver of the vehicle tom park and notifying it to the driver. Therefore, the convenience of the driver of the vehicle can be improved.

The problems, configurations, and effects other than those described above will be clarified from the description of the embodiments below.

### Brief Description of Drawings

[FIG. 1] FIG. 1 is a system configuration diagram schematically showing one embodiment of a driving support device according to the present invention.
[FIG. 2] FIG. 2 is a block diagram showing the relationship between input and output signals of a driving support ECU shown in FIG. 1.
[FIG. 3] FIG. 3 is a block diagram showing an internal configuration of the driving support ECU shown in FIG. 1.
[FIG. 4] FIG. 4 is a flowchart for explaining a calculation processing procedure by the driving support ECU shown in FIG. 1.
[FIG. 5] FIG. 5 is a diagram schematically illustrating an example of a parking route determination process by the driving support ECU shown in FIG. 1.
[FIG. 6] FIG. 6 is a diagram schematically illustrating another example of the parking route determination process by the driving support ECU shown in FIG. 1.
[FIG. 7] FIG. 7 is a diagram schematically illustrating still another example of the parking route determination process by the driving support ECU shown in FIG. 1.
[FIG. 8] FIG. 8 is a diagram schematically illustrating still another example of the parking route determination process by the driving support ECU shown in FIG. 1.
[FIG. 9] FIG. 9 is a diagram showing an example of an evaluation determination result used for the parking route determination process by the driving support ECU shown in FIG. 1.

### Description of Embodiments

Hereinafter, an embodiment of a driving support device according to the present invention will be described with reference to the drawings.

The driving support device according to the present embodiment can be applied to a moving body such as a passenger car, a truck, and a bus. The driving support device according to the present embodiment can support a driving operation when, for example, a vehicle is parked in a parking area in a parking lot. Hereinafter, a vehicle on which the driving support device according to the present embodiment is mounted may be referred to as an own vehicle.

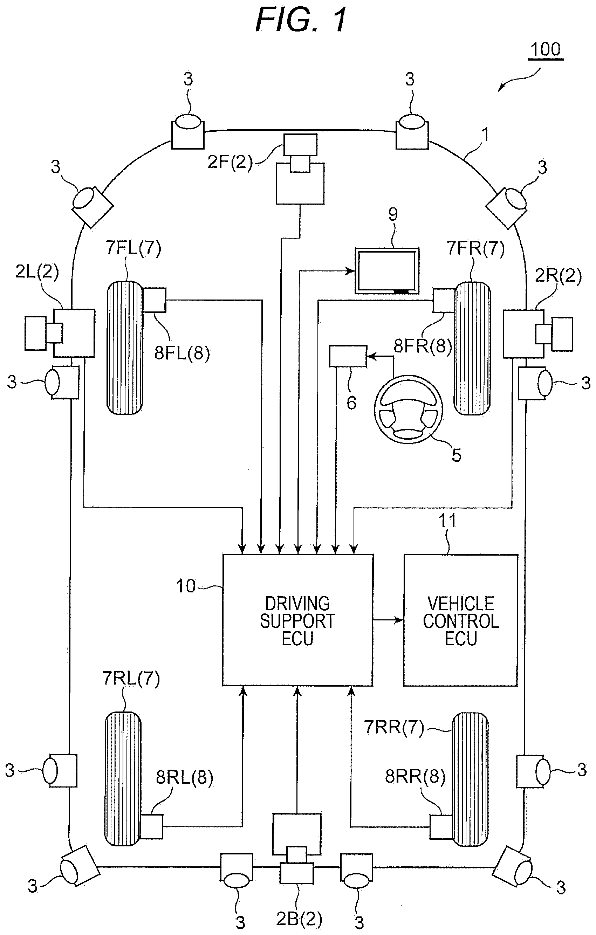

FIG. 1 schematically shows an embodiment of a driving support device according to the present invention.

A driving support device 100 is mounted on a vehicle 1 and mainly includes a front camera 2F mounted on the front side of the vehicle, a right camera 2R mounted on the right side of the vehicle, a rear camera 2B mounted on the rear side of the vehicle, a left camera 2L mounted on the left side of the vehicle, a sonar 3, an electric power steering device 6, a right front wheel speed sensor 8FR that detects a wheel speed of a right front wheel 7FR, a right rear wheel speed sensor 8RR that detects a wheel speed of a right rear wheel 7RR, a left rear wheel speed sensor 8RL that detects a wheel speed of a left rear wheel 7RL, a left front wheel speed sensor 8FL that detects a wheel speed of a left front wheel 7FL, an in-vehicle display device 9, a driving support electronic control unit (ECU) 10, a vehicle control ECU 11, and the like.

Each of the front camera 2F, the right camera 2R, the rear camera 2B, and the left camera 2L includes a lens and an image sensor, and is appropriately arranged so that the surrounding environment of the own vehicle 1 can be imaged. The captured images of the cameras 2F, 2R, 2B, and 2L are transmitted to the driving support ECU 10 for image processing. Hereinafter, a camera 2 is referred to unless otherwise distinguished. The camera 2 may be a monocular camera or a stereo camera. When the camera 2 is a stereo camera, the accuracy of environmental information (external world information) can be increased.

A plurality of sonars 3 is installed at the front, rear, and side portions of the vehicle 1, and each sonar 3 transmits ultrasonic waves and receives reflected waves that are the ultrasonic waves reflected from surrounding obstacles. Thus, the distance to the obstacle around the vehicle 1 is measured, and the measurement result is transmitted to the driving support ECU 10. The driving support ECU 10 stores obstacle information around the own vehicle 1 that is a measurement result transmitted from each sonar 3.

The camera 2 and the sonar 3 constitute an external world information acquisition unit that acquires external world information around the own vehicle 1. It should be noted that external world information around the own vehicle 1 may be acquired using sensing means other than the camera 2 and the sonar 3.

The right front wheel 7FR, the right rear wheel 7RR, the left rear wheel 7RL, and the left front wheel 7FL are arranged on the front, rear, left and right of the vehicle body of the vehicle 1, and the right front wheel speed sensor 8FR, the right rear wheel speed sensor 8RR, the left rear wheel speed sensor 8RL, and the left front wheel speed sensor 8FL are provided on the wheels 7FR, 7RR, 7RL, and 7FL, respectively. Each wheel speed sensor 8FR, 8RR, 8RL, 8FL detects each wheel speed and transmits each wheel speed to the driving support ECU 10. The driving support ECU 10 calculates the speed of the own vehicle 1 based on the information on each wheel speed. Hereinafter, unless otherwise distinguished, the right front wheel 7FR, the right rear wheel 7RR, the left rear wheel 7RL, the left front wheel 7FL is referred to as a wheel 7, and the right front wheel speed sensor 8FR, the right rear wheel speed sensor 8RR, the left rear wheel speed sensor 8RL, the left front wheel speed sensor 8FL may be referred to as a wheel speed sensor 8.

The electric power steering device 6 changes the direction of the wheel 7 in accordance with the operation amount (steering angle) of a steering wheel 5 provided in a cab of the vehicle 1.

The electric power steering device 6 includes, for example, a steering angle sensor that detects the steering angle of the steering wheel 5, a motor that assists the steering torque that becomes a torque for changing the direction of each wheel 7, and an electric power steering ECU that controls the steering torque (any of which is not shown), and controls the steering torque so as to assist the driver in operating the steering wheel 5 to change the direction of the wheel 7. The steering angle detected by the steering angle sensor of the electric power steering device 6 is transmitted to the driving support ECU 10. The driving support ECU 10 calculates the traveling direction of the own vehicle 1 based on the information on the steering angle.

The in-vehicle display device 9 is provided in the cab of the vehicle 1 and provides various information to the driver. The information provided to the driver includes, for example, an image captured by the camera 2 and processed by the driving support ECU 10. Further, as will be described later, the in-vehicle display device 9 presents an available parking place to the driver. For example, the in-vehicle display device 9 may be configured as a touch panel in which a display and an input device are integrated, may be a part of a car navigation system, or may be configured as a head-up display. The in-vehicle display device 9 may include an information input device such as a keyboard, a voice instruction device, and a switch. In addition, a pressure-sensitive or electrostatic touch panel is mounted on the screen of the in-vehicle display device 9 to enable various input operations, and the driver can transmit the input content to the driving support ECU 10 by performing the input operation with a touch panel.

The driving support ECU 10 calculates a place (position) where the own vehicle 1 can be parked based on the environmental information data received from the camera 2 and the sonar 3 (external world information acquisition unit). Further, the driving support ECU 10 estimates the place (estimated stop position) where the driver of the own vehicle 1 is estimated to stop the vehicle in order to park in the available parking place by receiving the parking support, determines a parking route that is calculated for performing the driving support from the estimated stop position to the available parking place, based on the environmental information and the vehicle information such as the minimum rotation radius of the own vehicle 1 (to be detailed later), and transmits the determination result and the available parking place to the in-vehicle display device 9. The in-vehicle display device 9 displays the available parking place transmitted from the driving support ECU 10 superimposed on the surrounding information of the own vehicle 1 being displayed, and when the evaluation result shows that the parking route for the available parking place is highly evaluated, displays a screen as recommended to the driver. The driver can park the own vehicle 1 quickly or can receive parking support that follows a comfortable parking route by performing parking for which parking support to the recommended target parking position (the target parking position selected from among the available parking places) has been received. In addition, if the evaluation result is low, the parking route to follow in the parking support cannot be calculated, and there is a possibility that parking support cannot be received. Therefore, the driver can determine not to park at the parking position where the evaluation is low.

Next, the driver selects an appropriate available parking place displayed on the in-vehicle display device 9 after the own vehicle 1 stops, and thus the driving support ECU 10, based on that information, calculates a parking route from the position of the own vehicle (the stop position of the own vehicle 1) to the selected place and transmits the calculated parking route to the vehicle control ECU 11. Here, the calculation of the parking route can be performed by a conventionally known calculation method.

The vehicle control ECU 11, in order to support guidance of the own vehicle 1 to the available parking place based on the parking route transmitted from the driving support ECU 10, supports any one or all of the driver's steering wheel operation, accelerator operation, brake operation, and the like.

For example, the vehicle control ECU 11 controls the speed of the own vehicle 1 by outputting target steering angle information to the electric power steering device 6, outputting a required driving force to the driving force control ECU (not shown) that controls the driving force of the own vehicle 1, and outputting a required braking force to the braking force control ECU (not shown) that controls the braking force of the own vehicle 1, and controls a shift range of the own vehicle 1 by outputting a request for a drive range or a reverse range or a parking range to a shift-by-wire control device (not shown) that controls the shift range of the automatic transmission. The driver can receive appropriate parking support during an operation for parking in the available parking place by controlling the own vehicle 1 with the vehicle control ECU 11.

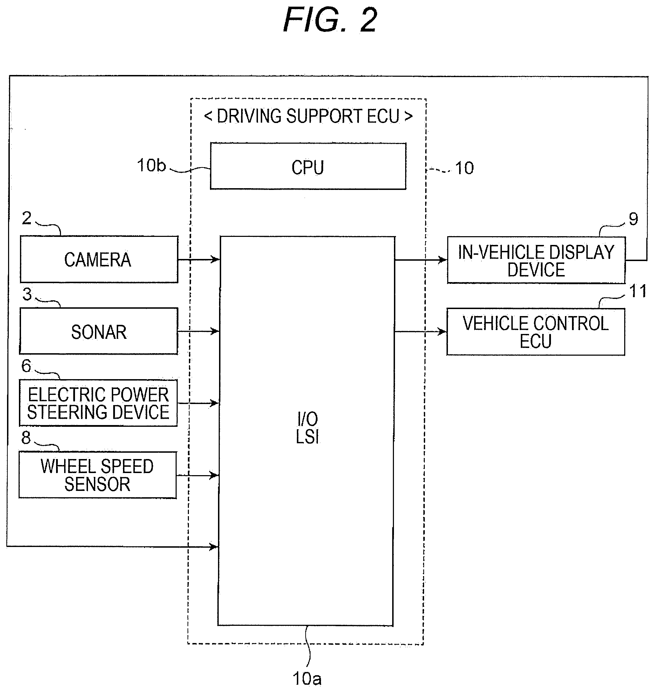

FIG. 2 schematically shows an example of the internal configuration of the driving support ECU 10 shown in FIG. 1, and is a block diagram showing the relationship between input and output signals of the driving support ECU 10 shown in FIG. 1.

The driving support ECU 10 includes an I/O LSI 10a including an A/D converter, a CPU 10b, and the like. As described above, signals are input from the camera 2, the sonar 3, the electric power steering device 6, the wheel speed sensor 8, and the in-vehicle display device 9. The driving support ECU 10 determines a parking route when parking support is started by a predetermined calculation process, transmits the determination result to the in-vehicle display device 9, and displays the result on the in-vehicle display device 9. The driver of the own vehicle 1 determines whether to perform parking support based on the display content.

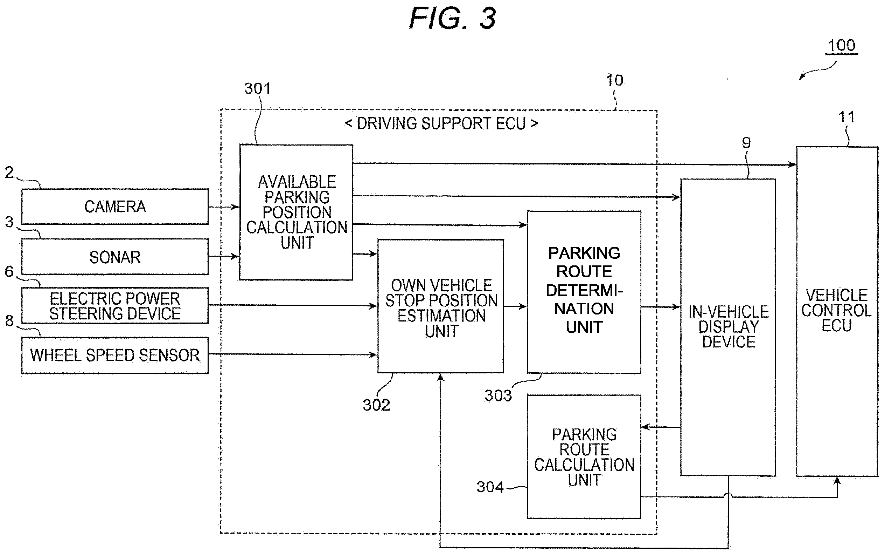

FIG. 3 shows an internal functional block configuration of the driving support ECU shown in FIG. 1. Such functional blocks are realized by hardware, software, or a combination thereof.

As shown in FIG. 3, the driving support ECU 10 basically includes an available parking position calculation unit 301, an own vehicle stop position estimation unit 302, a parking route determination unit 303, and a parking route calculation unit 304.

The available parking position calculation unit 301 analyzes the environmental information (external world information) around the own vehicle 1 acquired by the camera 2 or the sonar 3 (external world information acquisition unit), and determines whether there is a position where the own vehicle 1 can be parked. As to the available parking position, there are cases where no positions are found, only one position is found, and a plurality of positions is found. As an example of the analysis content, the available parking position calculation unit 301, when there is a parking space having a width equal to or more than the full width of the own vehicle 1, a length equal to or more than the full length thereof, and a height equal to or more than the full height thereof around the own vehicle 1, sets the space as a parking candidate, and transmits the coordinate position of the parking candidate and the analysis result of the parking candidate surrounding environment to the own vehicle stop position estimation unit 302, the parking route determination unit 303, the in-vehicle display device 9, and the like. In the present embodiment, environmental information around the own vehicle 1 acquired by the camera 2 or the sonar 3 is given as an example of input, but analysis may be performed based on information of a sensor using light. Further, in the above embodiment, when there is a parking space that is larger than the width, length, and height of the own vehicle 1, the space is set as a parking candidate, but the parking candidate (position where the own vehicle 1 can be parked) may be detected by a parking frame, a parking lot guide sign, or the like.

The own vehicle stop position estimation unit 302 calculates the speed of the own vehicle 1 from the wheel speed of each wheel 7 received from the wheel speed sensor 8, calculates the traveling direction of the own vehicle 1 from the steering angle of the steering wheel 5 received from the steering angle sensor of the electric power steering device 6, and calculates a coordinate position of the own vehicle 1 from the vehicle speed and the traveling direction of the own vehicle 1. Note that, the method for detecting the coordinate position of the own vehicle 1 is not limited to this. In addition, from the results collected in advance through experiments, etc., a stop position (estimated stop position) at which the own vehicle 1 will stop is calculated (estimated) from the current position of the own vehicle 1 by data or the like indicating after how many seconds the driver will brake and stop the vehicle since the parking candidate calculated by the available parking position calculation unit 301 is displayed on the in-vehicle display device 9. The calculated result is transmitted to the parking route determination unit 303.

The parking route determination unit 303 determines the parking route from the stop position to the available parking space, based on the coordinate position of the available parking space calculated by the available parking position calculation unit 301 and the surrounding environment information, the stop position (estimated stop position) at which the own vehicle 1 will stop calculated by the own vehicle stop position estimation unit 302, and the like (detailed later). Note that, when a plurality of available parking spaces is found, the parking route to each available parking space is evaluated. The determination result is transmitted to the in-vehicle display device 9.

The in-vehicle display device 9 displays the available parking place (space) acquired by the camera 2 superimposed on the surrounding information of the own vehicle 1 being displayed on the in-vehicle display device 9, and when the evaluation of the parking route to the available parking space is high according to the determination result of the parking route determination unit 303, displays a screen that recommends the available parking space (target parking position) of the parking route. If the evaluation of the parking route to the available parking space is low according to the determination result of the parking route determination unit 303, the in-vehicle display device 9 displays a screen that does not recommend the available parking space (target parking position) of the parking route. In addition, when there are multiple available parking spaces, depending on the evaluation result (for example, priority) of the parking route to each available parking space, each available parking space display screen (for example, color, shade, display contents such as text display) may be changed. Based on the screen display of the in-vehicle display device 9, the driver of the own vehicle 1 selects a place where the own vehicle 1 is parked from an available parking space and inputs a parking support start by a button or voice, and thus the information is transmitted to the parking route calculation unit 304 of the driving support ECU 10.

For example, the parking route calculation unit 304, when having received a signal indicating that the parking support start button is pressed from the in-vehicle display device 9, calculates the parking route from the stop position of the own vehicle 1 to the selected target parking position. Here, the stop position of the own vehicle 1 may be calculated by using the wheel speed of each wheel 7 received from the wheel speed sensor 8, the steering angle of the steering wheel 5 received from the steering angle sensor of the electric power steering device 6, or the like, or by using a calculation result in the own vehicle stop position estimation unit 302. The calculated result is transmitted to the vehicle control ECU 11.

In the vehicle control ECU 11, by controlling the own vehicle 1 so that the own vehicle 1 travels along the parking route calculated by the parking route calculation unit 304, the driver can receive appropriate parking support during vehicle operation for parking the own vehicle 1 to the target parking position.

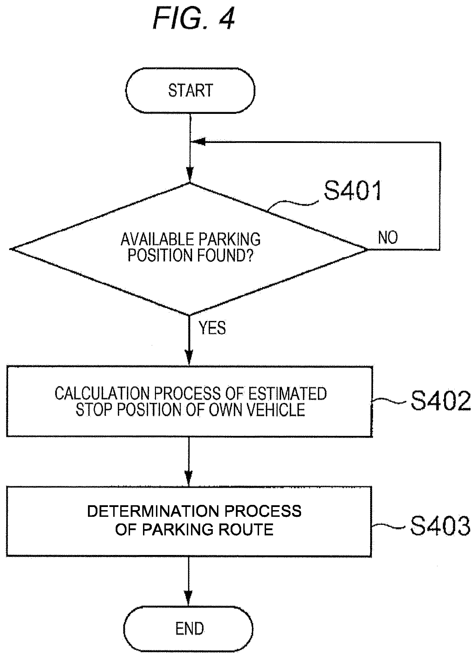

FIG. 4 is a flowchart illustrating a parking route determination processing procedure performed by the driving support ECU 10 shown in FIG. 1. Note that the processing shown in FIG. 4 is repeatedly (periodically) executed.

First, in step S401, environmental information around the own vehicle 1 acquired by the camera 2 or the sonar 3 is analyzed to determine whether there is a position where the own vehicle 1 can be parked. If an available parking position is found, the process proceeds to the next step S402. If not found, the processing of step S401 is performed again.

Next, in step S402, the speed of the own vehicle 1 is calculated from the wheel speed of each wheel 7 received from the wheel speed sensor 8, a traveling direction of the own vehicle 1 is calculated from the steering angle of the steering wheel 5 received from the steering angle sensor of the electric power steering device 6, and the coordinate position of the own vehicle 1 is calculated from the vehicle speed and the traveling direction of the own vehicle 1. In addition, from the results collected in advance through experiments, etc., a stop position (estimated stop position) at which the own vehicle 1 will stop is calculated from the current position of the own vehicle 1 by data or the like indicating after how many seconds the driver will brake and stop the vehicle since the parking candidate found in step S401 is displayed on the in-vehicle display device 9.

In step S403, the parking route is evaluated based on the parking candidate found in step S401 and the surrounding environment, the estimated stop position of the own vehicle 1 calculated in step S402, and the vehicle specifications such as the minimum rotation radius, full length, full width, etc. of the own vehicle 1.

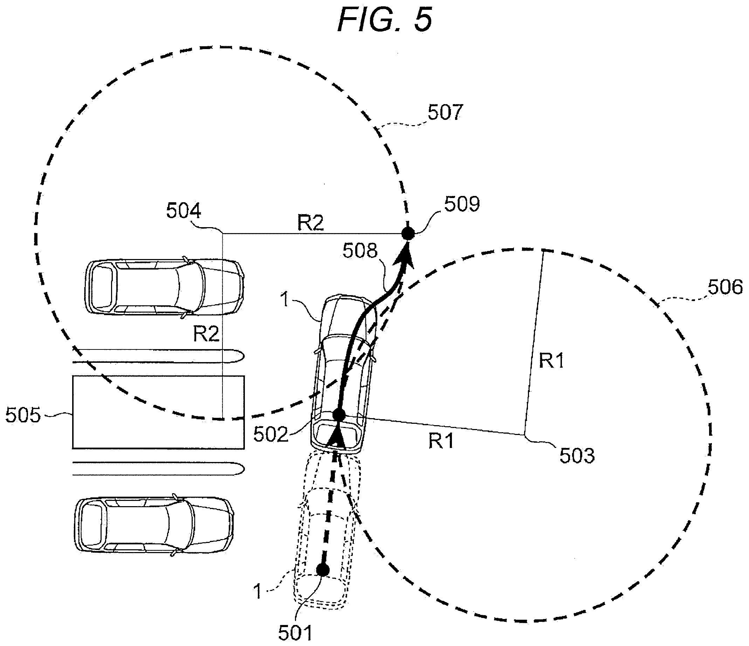

FIGS. 5 to 9 explain the outline of the parking route determination process in step S403 of FIG. 4.

In FIG. 5, a reference numeral 501 indicates the position of the own vehicle 1 during running that is manually operated by the driver in order to find an available parking position, and a reference numeral 502 indicates an estimated stop position at which the own vehicle 1 will stop by data or the like indicating after how many seconds the driver will brake and stop the vehicle since the available parking position is displayed on the in-vehicle display device 9. A reference numeral 503 indicates a turning center when it is assumed that the vehicle has turned from the estimated stop position 502 at a certain turning radius R1. A reference numeral 504 indicates a turning center when it is assumed that the vehicle turns from a certain point in the available parking position 505 at a certain turning radius R2. Note that, the reference numeral 503 is set as the turning center positioned on the opposite side of the available parking position 505 side with respect to the estimated stop position 502, and the reference numeral 504 is set as the turning center positioned on the opposite side of the estimated stop position 502 side with respect to a certain point in the available parking position 505.

Here, the turning radii R1 and R2 are set based on the minimum rotation radius of the own vehicle 1. Specifically, each turning radius R1, R2 is equal to or greater than the minimum rotation radius of the own vehicle 1 and can be set to a value desired by the driver of the own vehicle 1, for example. Further, each turning radius R1, R2 may be constant or may not be constant (for example, in consideration of the steering operation of the steering wheel 5). Further, the turning radius R1 and the turning radius R2 may be the same or different.

In the parking route determination process in step S403, the number of intersections of the arc 506 having the turning center 503 and the turning radius R1 and the arc 507 having the turning center 504 and the turning radius R2 is calculated, and a parking route to the available parking position is evaluated according to the number of intersections. In the example shown in FIG. 5, the number of intersections is two. When the own vehicle 1 is parked, in a case where a parking route is considered in which the vehicle, after moving forward, turns back and moves backward to the target parking position (available parking position) 505, it is conceivable that the parking route when moving backward is on a part of the arc 507 from a point 509 where the parking route 508 when moving forward intersects the arc 507 to the target parking position 505. In that case, due to restrictions on vehicle operation, the parking route 508 when moving forward may possibly become a parking route that draws an S-shape as shown in the figure or is long in the forward direction and tends to become a parking route which the driver feels uncomfortable or has a long route length. Therefore, the parking route is evaluated low.

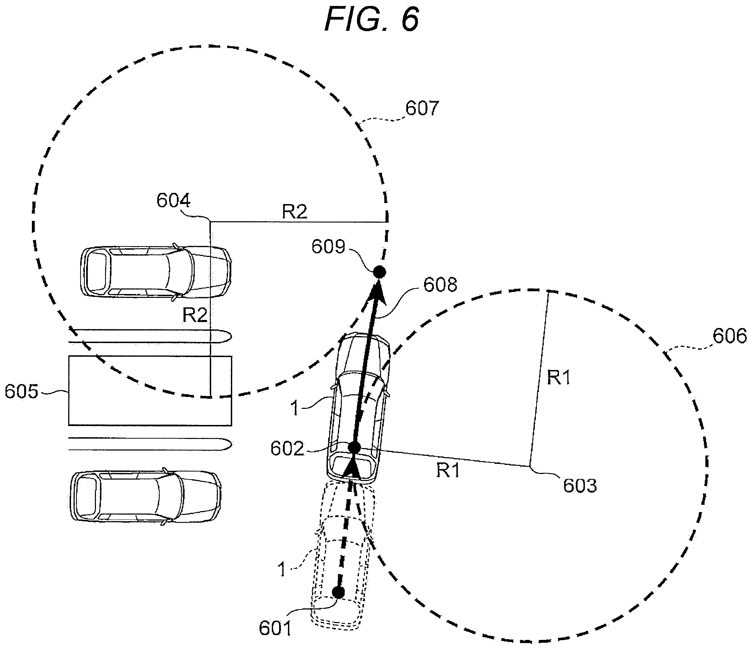

Next, the example shown in FIG. 6 is an example when there are no intersections when the number of intersections of the arc 606 having the turning center 603 and the turning radius R1 and the arc 607 having the turning center 604 and the turning radius R2 is calculated. When the own vehicle 1 is parked, in a case where a parking route is considered in which the vehicle, after moving forward, turns back and moves backward to a target parking position (available parking position) 605, it is conceivable that a parking route when moving backward is on a part of an arc 607 from a point 609 where a parking route 608 when moving forward intersects the arc 607 to the target parking position 605. When there are no intersections or when there is only one intersection (that is, when the arc 606 and the arc 607 are in contact), the parking route 608 when moving forward may possibly become a parking route that turns in one direction as shown in the figure due to vehicle operation restrictions or is short, and such a parking route tends to feel natural to the driver. Therefore, the parking route is evaluated high.

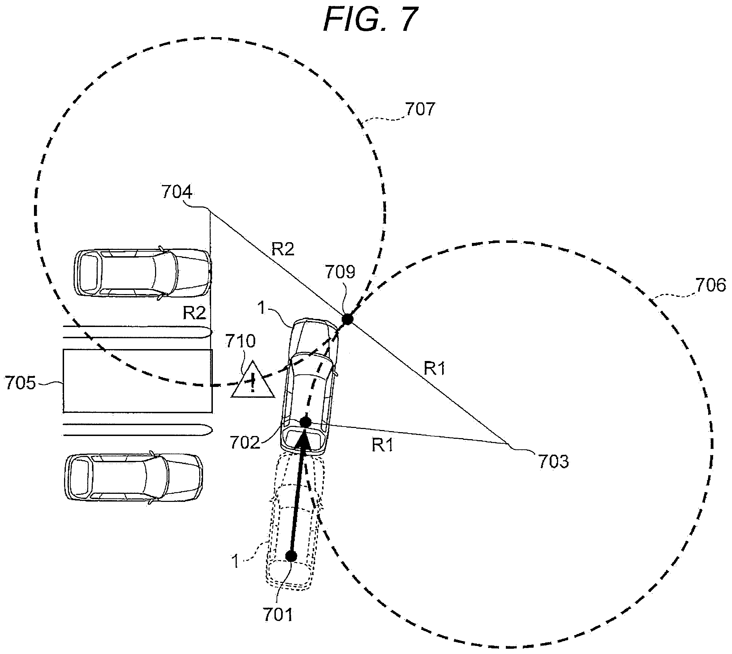

FIG. 7 is a diagram for explaining an example when determination (evaluation) is performed in step S403 in FIG. 4 in consideration of the presence or absence of an obstacle on the parking route. The position of the obstacle is obtained from environmental information (external world information) around the own vehicle 1 acquired by the camera 2 or the sonar 3, for example.

As an example of the above determination method, for example, when there are no intersections as shown in FIG. 6 or when there is only one intersection (that is, when the parking route is evaluated high), a turning radius R1 of an arc 706 is changed (increased), and then, the turning radius R1 of the arc 706 is obtained so that the arc 706 having a turning center 703 and a turning radius R1 and an arc 707 having a turning center 704 and a turning radius R2 are in contact with each other, and a contact point 709 between the arc 706 and the arc 707 is obtained. Here, the arc 707 from an available parking position 705 is a fixed value, the turning radius R1 of the arc 706 from an estimated stop position 702 is changed, and arcs when the arc 706 and the arc 707 are in contact are obtained. However, the arc 706 from the estimated stop position 702 may be a fixed value, and the arc 707 from the available parking position 705 may be changed to give arcs when the arc 706 and the arc 707 contact each other. Alternatively, both of the arc 706 from the estimated stop position 702 and the arc 707 from the available parking position 705 may be changed to give arcs when the arc 706 and the arc 707 are in contact with each other.

Since the parking route when moving forward is considered to be an arc portion from the estimated stop position 702 to the contact point 709, and the parking route when moving backward is considered to be an arc portion from the contact point 709 to the target parking position 705, in the parking route determination process of step S403, it is determined whether an obstacle 710 exists in each of the arc portions. When there is the obstacle 710, it is necessary to draw a parking route that avoids the obstacle 710, and thus there is a high possibility that the driver will feel uncomfortable in the parking route. Therefore, such a parking route is evaluated to be low (or, impossible to park).

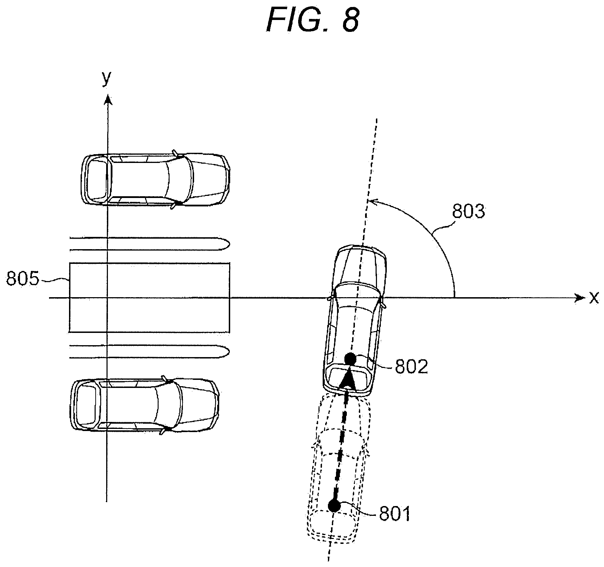

FIG. 8 is a diagram for explaining an example when evaluating a parking route in step S403 of FIG. 4 based on data previously investigated by experiments or the like.

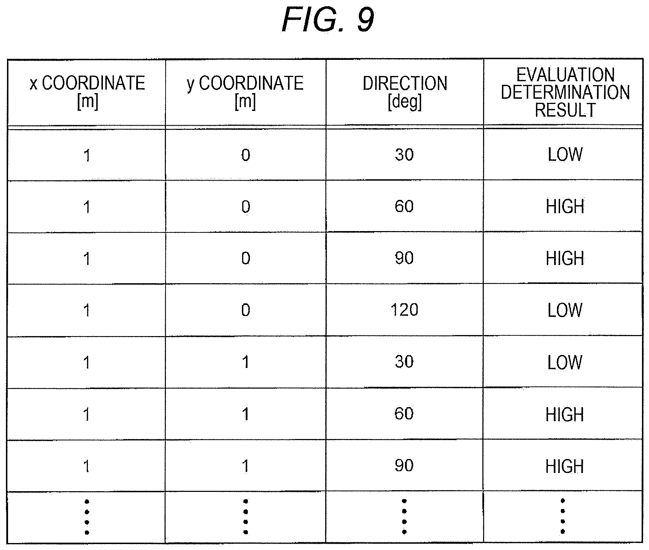

As shown in FIG. 9, a certain point in a target parking position 805 is set as the origin of the xy coordinates, the x coordinate and the y coordinate at the estimated stop position 802 and a parking route in a direction 803 of the own vehicle 1 are calculated in the desktop environment or the like in advance (for example, before shipping or during vehicle development), and the evaluation determination result of the parking route is stored in advance, and in the parking route determination process of step S403, the parking route to the target parking position 805 is evaluated based on (in consideration of) the evaluation determination result.

In the parking route determination process in step S403, the parking route to the target parking position 805 may be evaluated only from the evaluation determination result shown in FIG. 9.

The determination result in step S403 of FIG. 4 is transmitted to the in-vehicle display device 9, and the driver of the own vehicle 1 selects an appropriate available parking space based on the screen display of the in-vehicle display device 9 and inputs the parking support start, and thereby a parking route from the stop position of the own vehicle 1 to the selected available parking space is calculated, and appropriate parking support can be received during the vehicle operation for parking the own vehicle 1 to the available parking space.

As described above, the driving support device 100 of the present embodiment calculates the estimated stop position where the vehicle 1 will stop for the driver of the vehicle 1 to park, makes a simple evaluation determination of the parking route in advance (while the vehicle 1 is running) which is calculated after the vehicle 1 is stopped by the driver of the vehicle 1, and informs the driver of the vehicle 1 in advance by the in-vehicle display device 9, and thereby the driver can know the superiority or inferiority (for example, priority) of the parking route in the parking support before the parking support is started and determine whether to perform parking using the parking support to the target parking position. Therefore, when parking support is actually received, it becomes less likely that the parking route will not be drawn, or the parking route that makes the driver feel uncomfortable will be drawn, and the convenience of the driver of the vehicle 1 can be improved.

It should be noted that the present invention is not limited to the above-described embodiments, but includes various modified examples. For example, the above-described embodiments have been described in detail in order to explain the present invention in an easy-to-understand manner, and are not necessarily limited to those having all the described configurations.

Further, each of the configurations, functions, processing units, processing means, etc. described above may be realized by hardware, for example, by designing part or all of them with an integrated circuit. Further, each configuration, function, etc. described above may be realized by software by the processor interpreting and executing a program that realizes each function. Information such as a program, a table, and a file for realizing each function can be placed in a memory, a hard disk, a storage device such as a solid state drive (SSD), or a recording medium such as an IC card, an SD card, or a DVD.

Further, control lines and information lines indicate what is considered to be necessary for the description, and not all control lines and information lines in the product are necessarily shown. In practice, almost all configurations may be considered to be mutually connected.

### Reference Signs List

- 1: vehicle (own vehicle)
- 2: camera (external world information acquisition unit)
- 3: sonar (external world information acquisition unit)
- 5: steering wheel
- 6: electric power steering device
- 7: wheel
- 8: wheel speed sensor
- 9: in-vehicle display device
- 10: driving support ECU
- 11: vehicle control ECU
- 100: driving support device
- 301: available parking position calculation unit
- 302: own vehicle stop position estimation unit
- 303: parking route determination unit
- 304: parking route calculation unit

## Claims

1. A driving support device, comprising:
an external world information acquisition unit (2, 3) configured to acquire external world information;
an available parking position calculation unit (301) configured to calculate an available parking position of an own vehicle from the external world information acquired by the external world information acquisition unit (2, 3);
an own vehicle stop position estimation unit (302) configured to detect, while the vehicle is running, a position of the own vehicle and to estimate an estimated stop position at which the own vehicle is estimated to stop from the position of the own vehicle; and
a parking route determination unit (303) configured to determine, while the vehicle is running, a first parking route from the estimated stop position to one or more of the available parking positions, wherein
the parking route determination unit (303) is configured to determine the first parking route on a basis of an arc having a turning radius greater than or equal to a minimum rotation radius of the own vehicle from the estimated stop position and an arc having a turning radius greater than or equal to a minimum rotation radius of the own vehicle from the available parking position,
and comprising an in-vehicle display device (9) configured to display the available parking position, and to change a display content of each available parking position according to an determination result of the first parking route to each available parking position.

2. The driving support device according to claim 1, further comprising a parking route calculation unit (304) configured to calculate a second parking route from the position of the own vehicle to the available parking position selected on a basis of an determination result of the parking route determination unit(303).

3. The driving support device according to claim 1, wherein the parking route determination unit (303) is configured to determine the first parking route on a basis of a number of intersections between an arc having a turning radius greater than or equal to a minimum rotation radius of the own vehicle from the estimated stop position and an arc having a turning radius greater than or equal to a minimum rotation radius of the own vehicle from the available parking position.

4. The driving support device according to claim 1, wherein the own vehicle stop position estimation unit (302) is configured to receive input from an electric power steering device and from a wheel speed sensor for estimating said estimated stop position.

5. The driving support device according to claim 1, wherein the parking route determination unit (303) is configured to determine the first parking route in consideration of an obstacle position obtained from the external world information acquired by the external world information acquisition unit (2, 3).

6. The driving support device according to claim 5, wherein the parking route determination unit (303) is configured to obtain arcs when an arc having a turning radius greater than or equal to a minimum rotation radius of the own vehicle from the estimated stop position comes in contact with an arc having a turning radius greater than or equal to a minimum rotation radius of the own vehicle from the available parking position and to determine the first parking route on a basis of presence or absence of the obstacle in an arc portion from the estimated stop position to its contact point and an arc portion from the contact point to the available parking position.

7. The driving support device according to claim 6, wherein the parking route determination unit (303) is configured to obtain the arcs in contact with each other by setting, to a fixed value, one of the arc having the turning radius greater than or equal to the minimum rotation radius of the own vehicle from the estimated stop position and the arc having the turning radius greater than or equal to the minimum rotation radius of the own vehicle from the available parking position, and changing the other of the arc having the turning radius greater than or equal to the minimum rotation radius of the own vehicle from the estimated stop position and the arc having the turning radius greater than or equal to the minimum rotation radius of the own vehicle from the available parking position.

8. The driving support device according to claim 1, wherein the parking route determination unit (303) is configured to determine the first parking route in consideration of the estimated stop position, the available parking position, and a determination result stored in advance for the estimated stop position and the available parking position.

9. The driving support device according to claim 1, wherein the external world information acquisition unit (2, 3) comprises a camera (2) and a sonar (3).

## Patentansprüche

1. Fahrunterstützungseinrichtung, umfassend:
eine Umfeldinformationserlangungseinheit (2, 3), die ausgestaltet ist, um eine Umfeldinformation zu erlangen;
eine Einheit (301) zur Berechnung einer verfügbaren Parkposition, die ausgestaltet ist, um eine verfügbare Parkposition eines eigenen Fahrzeugs aus der durch die Umfeldinformationserlangungseinheit (2, 3) erlangten Umfeldinformation zu berechnen;
eine Einheit (302) zur Schätzung einer Stoppposition des eigenen Fahrzeugs, die ausgestaltet ist, um, während das Fahrzeug fährt, eine Position des eigenen Fahrzeugs zu detektieren und um eine geschätzte Stoppposition, an der das eigene Fahrzeug schätzungsweise stoppt, aus der Position des eigenen Fahrzeugs zu schätzen; und
eine Parkroutenermittlungseinheit (303), die ausgestaltet ist, um, während das Fahrzeug fährt, eine erste Parkroute von der geschätzten Stoppposition zu einer oder mehreren der verfügbaren Parkpositionen zu ermitteln, wobei die Parkroutenermittlungseinheit (303) ausgestaltet ist, um die erste Parkroute auf der Grundlage eines Bogens mit einem Wenderadius, der größer als ein minimaler oder gleich einem minimalen Drehradius des eigenen Fahrzeugs von der geschätzten Stoppposition ist, und eines Bogens mit einem Wenderadius, der größer als ein minimaler oder gleich einem minimalen Drehradius des eigenen Fahrzeugs von der verfügbaren Parkposition ist, zu ermitteln,
und umfassend eine fahrzeuginterne Anzeigeeinrichtung (9), die ausgestaltet ist, um die verfügbare Parkposition anzuzeigen und um einen Anzeigeinhalt jeder verfügbaren Parkposition gemäß einem Ermittlungsergebnis der ersten Parkroute zu jeder verfügbaren Parkposition zu ändern.

2. Fahrunterstützungseinrichtung nach Anspruch 1, ferner umfassend eine Parkroutenberechnungseinheit (304), die ausgestaltet ist, um eine zweite Parkroute von der Position des eigenen Fahrzeugs zu der verfügbaren Parkposition, die auf der Grundlage eines Ermittlungsergebnisses der Parkroutenermittlungseinheit (303) ausgewählt wird, zu berechnen.

3. Fahrunterstützungseinrichtung nach Anspruch 1, wobei die Parkroutenermittlungseinheit (303) ausgestaltet ist, um die erste Parkroute auf der Grundlage einer Anzahl von Schnittpunkten zwischen einem Bogen mit einem Wenderadius, der größer als ein minimaler oder gleich einem minimalen Drehradius des eigenen Fahrzeugs von der geschätzten Stoppposition ist, und einem Bogen mit einem Wenderadius, der größer als ein minimaler oder gleich einem minimalen Drehradius des eigenen Fahrzeugs von der verfügbaren Parkposition ist, zu ermitteln.

4. Fahrunterstützungseinrichtung nach Anspruch 1, wobei die Einheit (302) zur Schätzung einer Stoppposition des eigenen Fahrzeugs ausgestaltet ist, um einen Eingang von einer Einrichtung einer elektrischen Servolenkung und von einem Raddrehzahlsensor zum Schätzen der geschätzten Stoppposition zu empfangen.

5. Fahrunterstützungseinrichtung nach Anspruch 1, wobei die Parkroutenermittlungseinheit (303) ausgestaltet ist, um die erste Parkroute unter Berücksichtigung einer Hindernisposition, die aus der durch die Umfeldinformationserlangungseinheit (2, 3) erlangten Umfeldinformation erhalten wird, zu ermitteln.

6. Fahrunterstützungseinrichtung nach Anspruch 5, wobei die Parkroutenermittlungseinheit (303) ausgestaltet ist, um Bögen zu erhalten, wenn ein Bogen mit einem Wenderadius, der größer als ein minimaler oder gleich einem minimalen Drehradius des eigenen Fahrzeugs von der geschätzten Stoppposition ist, mit einem Bogen mit einem Wenderadius, der größer als ein minimaler oder gleich einem minimalen Drehradius des eigenen Fahrzeugs von der verfügbaren Parkposition ist, in Kontakt gelangt, und um die erste Parkroute auf der Grundlage eines Vorhandenseins oder einer Abwesenheit des Hindernisses in einem Bogenabschnitt von der geschätzten Stoppposition zu seinem Kontaktpunkt und einem Bogenabschnitt von dem Kontaktpunkt zu der verfügbaren Parkposition zu ermitteln.

7. Fahrunterstützungseinrichtung nach Anspruch 6, wobei die Parkroutenermittlungseinheit (303) ausgestaltet ist, um die Bögen in Kontakt miteinander zu erhalten, indem einer von dem Bogen mit dem Wenderadius, der größer als der minimale oder gleich dem minimalen Drehradius des eigenen Fahrzeugs von der geschätzten Stoppposition ist, und dem Bogen mit dem Wenderadius, der größer als der minimale oder gleich dem minimalen Drehradius des eigenen Fahrzeugs von der verfügbaren Parkposition ist, auf einen festen Wert eingestellt wird, und der andere von dem Bogen mit dem Wenderadius, der größer als der minimale oder gleich dem minimalen Drehradius des eigenen Fahrzeugs von der geschätzten Stoppposition ist, und dem Bogen mit dem Wenderadius, der größer als der minimale oder gleich dem minimalen Drehradius des eigenen Fahrzeugs von der verfügbaren Parkposition ist, geändert wird.

8. Fahrunterstützungseinrichtung nach Anspruch 1, wobei die Parkroutenermittlungseinheit (303) ausgestaltet ist, um die erste Parkroute unter Berücksichtigung der geschätzten Stoppposition, der verfügbaren Parkposition und eines Ermittlungsergebnisses, das vorab für die geschätzte Stoppposition und die verfügbare Parkposition gespeichert wird, zu ermitteln.

9. Fahrunterstützungseinrichtung nach Anspruch 1, wobei die Umfeldinformationserlangungseinheit (2, 3) eine Kamera (2) und eine Sonareinrichtung (3) umfasst.

## Revendications

1. Dispositif d'assistance à la conduite, comprenant :
une unité d'acquisition d'informations d'environnement extérieur (2, 3) configurée pour acquérir des informations d'environnement extérieur ;
une unité de calcul de position de stationnement disponible (301) configurée pour calculer une position de stationnement disponible d'un véhicule propre à partir des informations d'environnement extérieur acquises par l'unité d'acquisition d'informations d'environnement extérieur (2, 3) ;
une unité d'estimation de position d'arrêt de véhicule propre (302) configurée pour détecter, tandis que le véhicule circule, une position du véhicule propre, et pour estimer une position d'arrêt estimée à laquelle il est estimé que le propre véhicule s'arrête à partir de la position de propre véhicule; et
une unité de détermination d'itinéraire de stationnement (303) configurée pour déterminer, tandis que le véhicule circule, un premier itinéraire de stationnement à partir de la position d'arrêt estimée jusqu'à l'une ou plusieurs des positions de stationnement disponibles, dans lequel
l'unité de détermination d'itinéraire de stationnement (303) est configurée pour déterminer le premier itinéraire de stationnement sur une base d'un arc ayant un rayon de virage supérieur ou égal à un rayon de rotation minimum du propre véhicule à partir de la position d'arrêt estimée, et d'un arc ayant un rayon de virage supérieur ou égal à un rayon de rotation minimum du propre véhicule à partir de la position de stationnement disponible,
et comprenant un dispositif d'affichage monté dans le véhicule (9) configuré pour afficher la position de stationnement disponible, et pour changer un contenu d'affichage de chaque position de stationnement disponible en fonction d'un résultat de détermination du premier itinéraire de stationnement jusqu'à chaque position de stationnement disponible.

2. Dispositif d'assistance à la conduite selon la revendication 1, comprenant en outre une unité de calcul d'itinéraire de stationnement (304) configurée pour calculer un second itinéraire de stationnement depuis la position du propre véhicule jusqu'à la position de stationnement disponible sélectionné sur une base d'un résultat de détermination de l'unité de détermination d'itinéraire de stationnement (303).

3. Dispositif d'assistance à la conduite selon la revendication 1, dans lequel l'unité de détermination d'itinéraire de stationnement (303) est configurée pour déterminer le premier itinéraire de stationnement sur une base d'un nombre d'intersections entre un arc ayant un rayon de virage supérieur ou égal un rayon de rotation minimum du propre véhicule à partir de la position d'arrêt estimée et d'un arc ayant un rayon de virage supérieur ou égal à un rayon de rotation minimum du propre véhicule à partir de la position de stationnement disponible.

4. Dispositif d'assistance à la conduite selon la revendication 1, dans lequel l'unité d'estimation de position d'arrêt du propre véhicule (302) est configurée pour recevoir une entrée provenant d'un dispositif de direction assistée électrique et d'un capteur de vitesse de roue pour estimer ladite position d'arrêt estimée.

5. Dispositif d'assistance à la conduite selon la revendication 1, dans lequel l'unité de détermination d'itinéraire de stationnement (303) est configurée pour déterminer le premier itinéraire de stationnement en tenant compte d'une position d'obstacle obtenue à partir des informations d'environnement extérieur acquises par l'unité d'acquisition d'informations d'environnement extérieur (2, 3),

6. Dispositif d'assistance à la conduite selon la revendication 5, dans lequel l'unité de détermination d'itinéraire de stationnement (303) est configurée pour obtenir des arcs quand un arc ayant un rayon de virage supérieur ou égal à un rayon de rotation minimum du propre véhicule à partir de la position d'arrêt estimée vient en contact avec un arc ayant un rayon de virage supérieur ou égal à un rayon de rotation minimum du propre véhicule à partir de la position de stationnement disponible, et pour déterminer le premier itinéraire de stationnement sur une base d'une présence ou d'une absence de l'obstacle dans une portion d'arc depuis la position d'arrêt estimée jusqu'à son point de contact et une portion d'arc depuis le point de contact jusqu'à la position de stationnement disponible.

7. Dispositif d'assistance à la conduite selon la revendication 6, dans lequel l'unité de détermination d'itinéraire de stationnement (303) est configuré pour obtenir les arcs en contact les uns avec les autres en définissant, à une valeur fixe, l'un de l'arc ayant le rayon de virage supérieur ou égal au rayon de rotation minimum du propre véhicule à partir de la position d'arrêt estimée, et de l'arc ayant le rayon de virage supérieur ou égal au rayon de rotation minimum du propre véhicule à partir de la position de stationnement disponible, et en changeant l'autre de l'arc ayant le rayon de virage supérieur ou égal au rayon de rotation minimum du propre véhicule à partir de la position d'arrêt estimée et de l'arc ayant le rayon de virage supérieur ou égal au rayon de rotation minimum du propre véhicule à partir de la position de stationnement disponible.

8. Dispositif d'assistance à la conduite selon la revendication 1, dans lequel l'unité de détermination d'itinéraire de stationnement (303) est configurée pour déterminer le premier itinéraire de stationnement en tenant compte de la position d'arrêt estimée, de la position de stationnement disponible, et d'un résultat de détermination stocké en avance pour la position d'arrêt estimée et la position de stationnement disponible.

9. Dispositif d'assistance à la conduite selon la revendication 1, dans lequel l'unité d'acquisition d'informations d'environnement externe (2, 3) comprend une caméra (2) et un sonar (3).
